# EUROPEAN PATENT SPECIFICATION

(11) **EP 1 865 877 B1**
(45) Date of publication and mention of the grant of the patent: **06.06.2012**
(21) Application number: 06735073.6
(22) Date of filing: 15.02.2006
(51) Int. Cl.: A61C 7/08, A61C 13/01, A61C 9/00, A63B 71/08, B29C 51/02, B29C 51/10, A61C 13/00

(54) **PLASTIC SHEETS FOR THERMOFORMING DENTAL PRODUCTS AND A METHOD**
KUNSTSTOFFFOLIEN ZUM THERMOFORMEN DENTALER PRODUKTE UND EIN VERFAHREN
FEUILLES POUR LE THERMOFORMAGE ET UN PROCÉDÉ

(30) Priority: 16.02.2005 US 653560 P
(43) Date of publication of application: 19.12.2007
(73) Proprietor: DENTSPLY International Inc., York, PA 17405-0872 (US)
(72) Inventor: ANDERSON, Mike, Palmetto, Florida 34221 (US); BOZMAN, John, F., Bradenton, Florida 34209 (US)
(74) Representative: Blodig, Wolfgang
(86) International application number: PCT/US2006/005230
(87) International publication number: WO 2006/088898

(56) References cited:
- EP-A- 1 279 478
- US-A- 6 082 995
- US-A1- 2004 038 171
- US-B1- 6 524 101
- US-B1- 6 832 914

## Description

### Technical Field

According to the invention, thermoformed sheets of plastic Type II are used to form tooth positioners or retainers for orthodontic treatment. These sheets are made of styrene-butadiene copolymer. They are "three dimensional", not flat, and will make devices (tooth positioners) that are more uniform in thickness and whose gingival edges are thicker than do flat sheets. A conventional dental tray formed from a preformed sheet comprising UDLPE is know amoun from US 2004/0038171.

### Background of the Invention

Plastic sheets for dental devices have been used for decades. They are heated using an electric grid and then when lowered to the dental model, a vacuum draws the plastic precisely to the model of the teeth. Indications for use are indirect bonding of orthodontic appliances, orthodontic retainers, mouth guards for sports, and aligners for correcting minor malocclusions. One of the drawbacks is that as the plastic thins as it is stretched over the plaster model of the teeth causing it to fail quicker, either in occlusion or because of the vacuum force drawing so hard at the outset. This failure can cause hours of extra labor to create a new aligner, as the teeth will have moved since the last impression was taken and the model made, and the doctor or lab must go through the whole process again. Also, it delays the treatment and can lead to relapse if the patient doesn't return immediately. Generally, these sheets are made with a medical grade plastic that severely limits the range of plastic choices. It is this common problem that the present invention corrects.

### Disclosure of the Invention

The present invention relates to a method according to claim 1 and a preformed sheet according to claim 2.

Failed appliances have long annoyed doctors and patients and this patent proposes to eliminate most of it.

The narrow range of medical plastics eliminates use of some of the major "tough" plastics that have evolved. Rather, it is an object of the invention to make the current medical grade plastics more acceptable.

This invention provides solutions which are defined by the claims, including :
1. Varying the thickness in the area that is stretched over the model so that when it thins it becomes more uniform in thickness.
2. Making the plastic uniform in thickness but pre-forming a three-dimensional or 3D area that partially builds in part of the area that would be stretched so that it thins much less than a flat sheet.
3. Doing both so that the average draw keeps the thickness after forming nearly uniform.

In general, a preformed sheet of plastic for use in a vacuum thermo forming process, comprises a preformed three dimensional area that flattens during heating, such that the preformed area is positioned over the model at a location where the plastic sheet is to be stretched.

A sheet of plastic for use in a vacuum thermoforming process, comprises at least one area of the sheet that is thicker than at least one other area of the sheet, such that the thicker area of the sheet area that is positioned over the model such that the thicker area is stretched over the model so that when it thins it becomes more uniform in thickness as compared to the thinner area.

A method of model thermoforming a dental device using a thermoforming machine, comprising the steps of providing a sheet of plastic having a thickened area that is positioned over an area of the model where stretching of the sheet will occur.

A method of model thermoforming a dental device using a thermoforming machine, comprising the steps of providing a sheet of plastic having a preformed three-dimensional area that is positioned over an area of the model where stretching of the sheet will occur.

### Brief Description of the Drawings

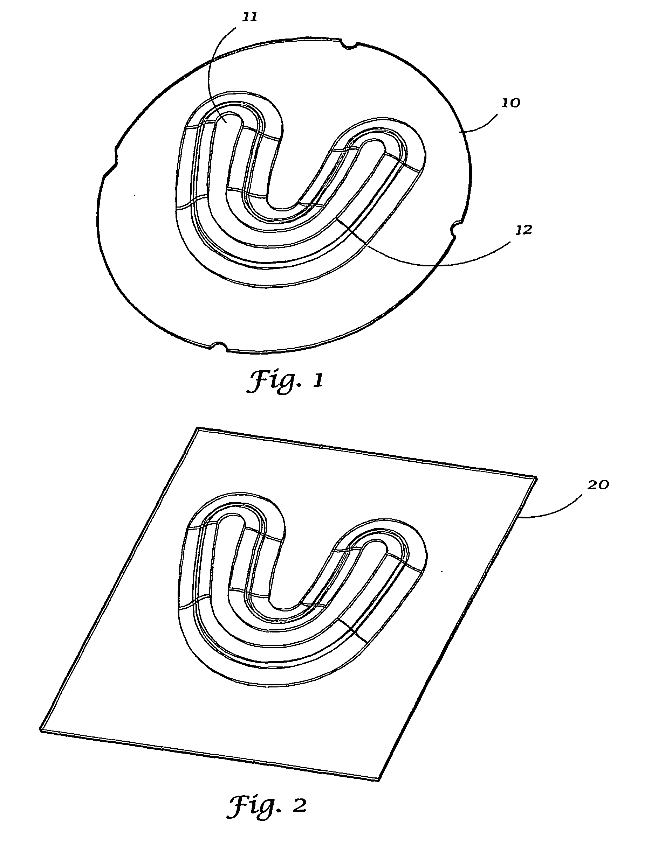

Figure 1 shows the round sheet of plastic 10 with the three dimensional form 11. This form 11 is designed to work with advanced equipment such as the BioStar or Drufomat thermoforming machines. With even thickness and the arch 12 partially formed, it allows improvement of as much as less than half the distortion as flat sheets experience.

Figure 2 shows the application in a square sheet 20 configuration design to be used with the Raintree Essix manual system thermoformer. Again, the formed target area has uniform thickness while being in 3D.

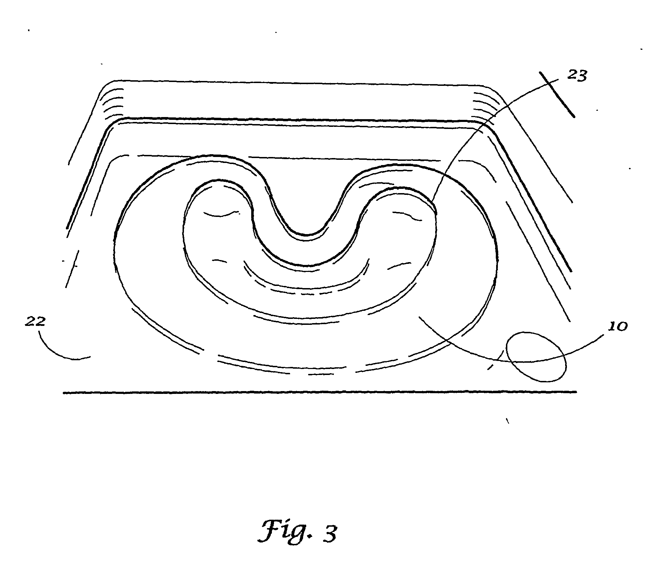

Figure 3 shows the plastic 10 as it heated to the desired temperature. Unlike current available plastic, it flattens rather than slumps greatly reducing the stretching experience with the current sheets available and increasing its wear toughness.

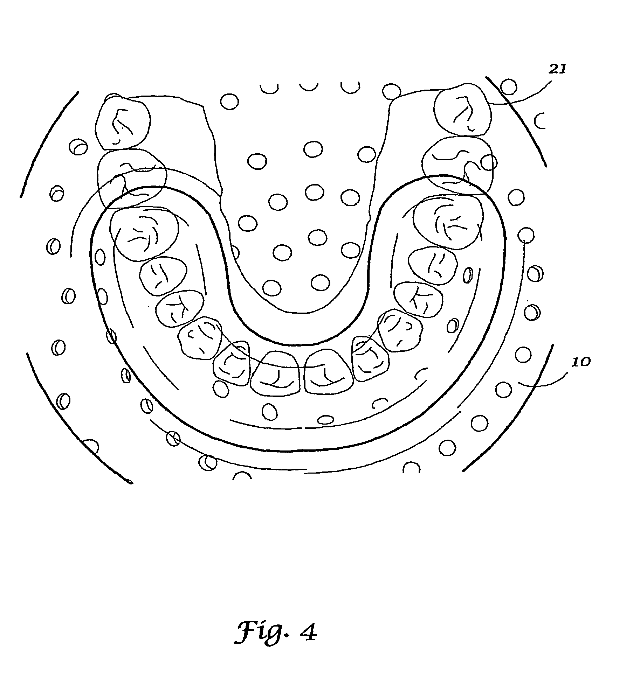

Figure 4 shows the application with the sheet 10 centered over the target mold 21 for vacuum.

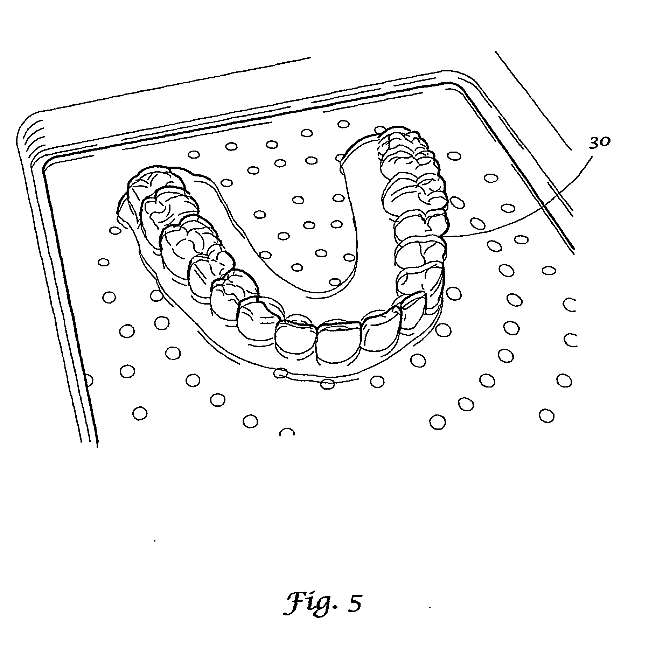

Figure 5 shows a formed tray 30that can be made without chill spray, reducing the cost of fabrication.

### Preferred Embodiments for Carrying Out the Invention

It is known in the profession that there are two main plastics available that have good forming characteristics. One, polystyrene, has excellent clarity and stiffness but poor wear resistance. The other, polyvinylchloride (PVC) has much greater wear resistance but is cloudy after forming and less aesthetic. These are available from Raintree Essix of Metairie, LA and Great Lakes in Buffalo NY. These same companies also offer desktop thermoforming machines, the BioStar and the Raintree Essix. One is a digital solution and the other analog, respectively. The choice is made regarding the volume that is used.

The dental professional takes an alginate impression of the patient's malocclusion. It then is filled with stone or plastic to make a positive model of the dentition. Depending on the thermoformer, a rectangular or round sheet of plastic, from 0.05 to 0.1 cm (.020" to .040") thick, is mounted in the chamber. The model is placed in the bed, the bottom of which is a vacuum chamber. At the top is a heating coil. When the machine has reached its ideal temperature, it heats the plastic until it slumps and then lays the slumped plastic over the model. The vacuum turns on and pulls the plastic tight over the plaster model so it becomes a negative of the positive model. A chill spray is often used to quickly set the form so it doesn't begin to plastically deform during the cooling process.

The problem is that the plastic has deformed as much as 5.1 cm (2")) deep over the area where the model was, which is an area of about 7" by ³Zt". Since the plastic had a fixed thickness to start, it has thinned to as much as 50% its original thickness. Many have tried to solve this by going to the stronger PVC material but some patients are uncomfortable with its aesthetics and it doesn't have the spring of PS. Others have tried thicker original sheets but the thicker sheets lose the spring characteristic along the edges that help hold the plastic in the mouth. Also, it can be too thick in areas where there is less stretch, such as lower anterior teeth, and disrupt the bite, creating an overbite.

This invention provides three solutions including the following aspects;
1. Varying the thickness in the area that is stretched over the model so that when it thins it becomes more uniform in thickness.
2. Making the plastic uniform in thickness but pre-forming a 3D area that partially builds in part of the area that would be stretched so that it thins much less than a flat sheet.
3. Doing both so that the average draw keeps the thickness after forming nearly uniform.

By varying the thickness to improve wear resistance; the plastic is extruded instead of rolled so that one can vary the thickness by area of the sheets. Extruding machines, are known to be capable of working easily with Polystyrene plastics. The PVC would be unnecessary, as the higher translucency of Polystyrene would be most desired by the patient while the wear resistance would be ideal.

The next solution works for both plastics by creating as the sheet is extruded, a 3-D area about 1.27 to 3.81 cm (½" to 1.5") that is preformed in the shape of a wide arch so that during forming, the plastic will be stretched less than 50%. It has been found that this results in an improvement of less than 25% loss of thickness. This means a thinner plastic can be used, creating less overbite at the end of treatment and less mid-treatment emergency visits when the tray fails.

Further, using a combined extrusion and stamping process, the first two processes can be combined to produce an ideal sheet that is thicker in the area of 3D pre-forming. While this process may be more expensive, it allows greater security for the professional and the patient that treatment results will be realized without failure, even ifjust used as a retainer

It is already known that an arch is between 13.97 and 17.78 cm (5.5 and 7") long, that it is no more than 1.5 cm deep, and the sheet sizes for the varied machines is well documented. The present invention provides for creating the 3D sheets in the prescribed area of the sheet where the activation will typically occur. Testing has shown that rather than slumping, the plastic will flatten when ready and contact the model at its dictated thickness.

Many doctors form several plastic appliances at the same time should there be a failure at the onset. In a sense, much of this is futile as if it is used as an active appliance, the teeth will have moved during the term. For retainers, this is acceptable but eliminating this duplication can save much labor and plastic.

Makers of active appliances, such as Align Technologies InvisAlign, rely on the aligners to be durable enough to make it through the phase of treatment that they have programmed. It an aligner fails, then the patient must return to the doctor, who will have to take a progress impression and model, and it will have to be sent in for a mid course correction and reanalyzed by the computers in order to make a new *complete set of trays.* Although the doctor is insured to a limited amount of corrections, it takes a lot of time and can lead to longer treatment of the patient, many times months longer. The doctor and InvisAlign cannot increase there fees so it is a loss to them, and the patient will be frustrated with the relapse and increased treatment time.

The present invention helps to limit the discomfort of failed treatment, lower the cost to doctors and labs, and promote better treatment results.

According to the invention, there is provided a plastic sheet 10 for thermo forming of dental devices 30 where the thickness varies to strengthen the slumping area 22 yet has a springier or more resilient area 23 where it is to fit over or snap onto the patient's teeth. A plastic sheet 10 can be preformed with a wide 3D arch shape 12, or any other shape (not shown) that when heated will strengthen the resulting form as opposed to traditional sheets that thin at depth with heating and vacuum. In one embodiment, a polystyrene or other polymer suitable for thermoforming is used. The inventive sheet is preferably designed to be more than about 80% (percent) translucent after forming so that it essentially is nearly invisible and is shaped in the form of a the patient's dentition. This of course, is not necessarily required for practice of the present invention. The sheet 10 may have a thickened area of any or even a non-descript shape (not shown) such as form area 11.

In another embodiment, the sheets 10 are provided with preformed areas 12 in the form of dental arches, and are further provided in several different sized arches based on dental averages. It is preferred that the sheets provide at least about 80% translucency or that they be substantially completely transparent sheets of plastic that are in 3D form before heating on the dental plaster or stone model to create dental appliances where the 3D flattens more than slumping so the integral strength of the formed area is not significantly reduced.

As stated above, it is preferred that the sheet 10 be configured to reduce overbite problems at the end of treatment by using a thinner plastic from the onset so that the occlusal relationship at the anterior teeth at the end of treatment is less than about 3 mm of overbite.

The present invention provides in one embodiment, a plastic sheet 10 for model-thermoforming that is thicker where the plastic is to be stretched over the model and is formed in a 3D profile so that the weakened areas during formation are less than about 25% as would be the case with a completely flat sheet.

It is therefore evident that the present invention carries out the objects hereof and otherwise provides an improvement to the are of plastic sheet, model-vacuum thermoforming. The invention has been described and represented herein and on the drawings without attempting to address every variation that may fall into the scope of the attached claims.

## Claims

1. A method of model thermoforming an active dental device for orthodontic treatment, comprising the steps of
(a) providing an extruded sheet (10) of styrene-butadiene copolymer plastic having a preformed three-dimensional area (11) in the shape of a wide arch that is positioned over an area of the model where stretching of the sheet will occur; and
(b) forming the active dental device for orthodontic treatment by using a thermoforming machine, whereby the plastic will be stretched less than 50 %,
wherein the sheet of plastic has a thickened area that is positioned over an area of the model where stretching of the sheet will occur.

2. A preformed sheet (10) of plastic made of extruded styrene-butadiene copolymer for use in a vacuum thermoforming process as defined by claim 1, comprising a preformed three-dimensional area (11) that flattens during heating, such that the preformed area can be positioned over the model at a location where the plastic sheet is to be stretched, whereby the sheet comprises a thickened area that can be positioned over an area of the model where stretching of the sheet will occur.

3. The preformed sheet according to claim 2, wherein the area of the sheet (10) that is thicker than at least one other area of the sheet can be positioned over the model such that the thicker area can be stretched over the model so that when it thins it becomes more uniform in thickness as compared to the thinner area.

## Patentansprüche

1. Verfahren zum Modell-Warmformen einer aktiven Dentalvorrichtung für eine orthodontische Behandlung, umfassend die Stufen
(a) einer Bereitstellung einer extrudierten Folie (10) aus Styrol-Butadien-Copolymerplastik mit einem vorgeformten dreidimensionalen Bereich (11) in der Form eines breiten Bogens, der über einem Bereich des Modells positioniert wird, in dem eine Dehnung der Folie stattfinden wird; und
(b) ein Formung der aktiven Dentalvorrichtung für eine orthodontische Behandlung unter Verwendung einer Warmformmaschine, wobei der Plastik weniger als 50% gedehnt wird,
wobei die Plastikfolie einen verstärkten Bereich aufweist, der über einem Bereich des Modells positioniert wird, in dem ein Dehnung der Folie stattfinden wird.

2. Vorgeformte Plastikfolie (10) aus extrudiertem Styrol-Butadien-Copolymer zur Verwendung in einem Vakuum-Warmformverfahren, wie es in Anspruch 1 definiert wird, umfassend einen vorgeformten dreidimensionalen Bereich (11) der sich während eines Erwärmens verflacht, so dass der vorgeformte Bereich (11), der an einer Stelle an der die Plastikfolie gedehnt werden soll über dem Modell positioniert werden kann, wobei die Folie einen verstärkten Bereich umfasst, der über einem Bereich des Modells positioniert werden kann in dem ein Dehnen der Folie stattfinden wird.

3. Die vorgeformte Folie nach Anspruch 2, wobei der Bereich der Folie (10), der stärker ist als mindestens ein anderer Bereich der Folie, über dem Modell positioniert werden kann, so dass der verstärkte Bereich über dem Modell gedehnt werden kann, so dass, wenn dieser sich ausdünnt, dessen Stärke verglichen mit dem dünneren Bereich einheitlicher wird.

## Revendications

1. Procédé pour le thermoformage suivant un modèle d'un dispositif dentaire actif pour traitement orthodontique, comprenant les étapes consistant à :
(a) fournir une feuille extrudée (10) d'une matière plastique copolymère styrène-butadiène ayant une zone tridimensionnelle préformée (11) sous forme d'un arc large qui est positionné sur une zone du modèle où l'étirage de la feuille se produira ; et
(b) former le dispositif dentaire actif pour traitement orthodontique en utilisant une machine de thermoformage, ce qui fait que la matière plastique sera étirée de moins de 50 %,
dans lequel la feuille de matière plastique a une zone épaissie qui est positionnée sur une zone du modèle où l'étirage de la feuille se produira.

2. Feuille préformée (10) de matière plastique constituée d'un copolymère styrène-butadiène extrudé pour une utilisation dans un procédé de thermoformage sous vide suivant la revendication 1, comprenant une zone tridimensionnelle préformée (11) qui s'aplatit au cours du chauffage, de telle sorte que la zone préformée (11) soit positionnée sur le modèle à un emplacement où la feuille en matière plastique doit être étirée, ce qui fait que la feuille comprend une zone épaissie qui peut être positionnée sur une zone du modèle où l'étirage de la feuille se produira.

3. Feuille préformée suivant la revendication 2, dans laquelle la zone de la feuille (10) qui est plus épaisse qu'au moins une autre zone de la feuille peut être positionnée sur le modèle de telle sorte que la zone plus épaisse puisse être étirée sur le modèle afin que, lorsqu'elle s'amincit, elle devienne d'épaisseur plus uniforme comparativement à la zone plus mince.
